(19)

Europäisches
Patentamt

European
Patent Office

Office européen
des brevets

(11) **EP 2 821 265 B1**

(12) **EUROPEAN PATENT SPECIFICATION**

(45) Date of publication and mention
of the grant of the patent:
**05.09.2018 Bulletin 2018/36**

(21) Application number: **14175380.6**

(22) Date of filing: **02.07.2014**

(51) Int Cl.:
**B60G 13/14** *(2006.01)*          **B60G 17/06** *(2006.01)*
**B60G 17/0165** *(2006.01)*

(54) **Apparatus for obtaining predetermined damping characteristics and a simultaneous energy recovery in regenerative shock absorbers and corresponding method**

Vorrichtung für den Erhalt einer vorbestimmten Dämpfungscharakteristik und simultaner Energierückgewinnung eines regenerativen Dämpfers und zugehöriges Verfahren

Dispositif pour obtenir des caractéristiques d'amortissement prédéterminées et une récupération d'énergie dans un amortisseur régénérateur et méthode correspondante

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2013 IT TO20130558**

(43) Date of publication of application:
**07.01.2015 Bulletin 2015/02**

(73) Proprietors:
• **Magneti Marelli S.p.A.**
  **20011 Corbetta (MI) (IT)**
• **Sistemi Sospensioni S.p.A.**
  **20011 Corbetta (Milano) (IT)**

(72) Inventors:
• **Nepote, Andrea**
  **I-20011 Corbetta (Milano) (IT)**
• **Greco, Giordano**
  **I-20011 Corbetta (Milano) (IT)**

(74) Representative: **Crovini, Giorgio**
  **Buzzi, Notaro & Antonielli d'Oulx**
  **Corso Vittorio Emanuele II, 6**
  **10123 Torino (IT)**

(56) References cited:
  **US-A1- 2004 206 559      US-A1- 2004 206 561**
  **US-A1- 2010 072 760      US-A1- 2010 262 308**

**Description**

The present invention relates to an apparatus and a method for obtaining predetermined damping characteristics and simultaneous energy recovery in a regenerative shock absorber that comprise a transformation of the linear motion of the piston rod of a shock absorber into a rotary motion of the shaft of an electric generator, the method comprising a DC/DC conversion stage configured for converting the voltage of the electric generator for an accumulation element, in particular a battery.

In the automotive field, regenerative shock absorbers are known, which convert movements of the shock absorber into energy.

In this field, of particular interest from the standpoint of efficiency of conversion are regenerative shock absorbers that envisage a transformation of the linear motion of the piston rod into a rotary motion of the shaft of an electric generator, from which it is hence possible to recover, in the form of electricity, the energy that would otherwise be dissipated in heat. It is known to carry out the above transformation via mechanical or hydraulic means in such a way that the rotation of the shaft of the electric generator has always the same direction of rotation, irrespective of the direction of the velocity of the piston rod. This enables a better efficiency of conversion of energy, from kinetic energy to electrical energy. The electric generator is usually a direct-current (d.c.) generator, which supplies a d.c. output voltage. If, instead, a synchronous generator is used, a rectifier bridge is used to obtain the d.c. output voltage. In either case, it anyway necessary to use a DC/DC converter to adapt the output voltage of the electric generator to the voltage of battery of the vehicle.

It is likewise known to use a DC/DC converter that is controlled in output voltage, to adapt to the battery, like the regulator of an alternator.

It is moreover known that the presence of an energy-recovery apparatus associated to the shock absorber affects the force-velocity characteristic of the shock absorber itself, and that consequently the apparatus can be designed so as to provide the required specific force-velocity characteristic. It is likewise possible to provide more than one force-velocity characteristic so as to implement a control of damping as a function of the operating conditions of the vehicle. This control may consist of a slow modification of the damping characteristics, thus performing a control of the suspension of an adaptive type, or else may be a real-time control, thus performing a control of the suspension of a semi-active type.

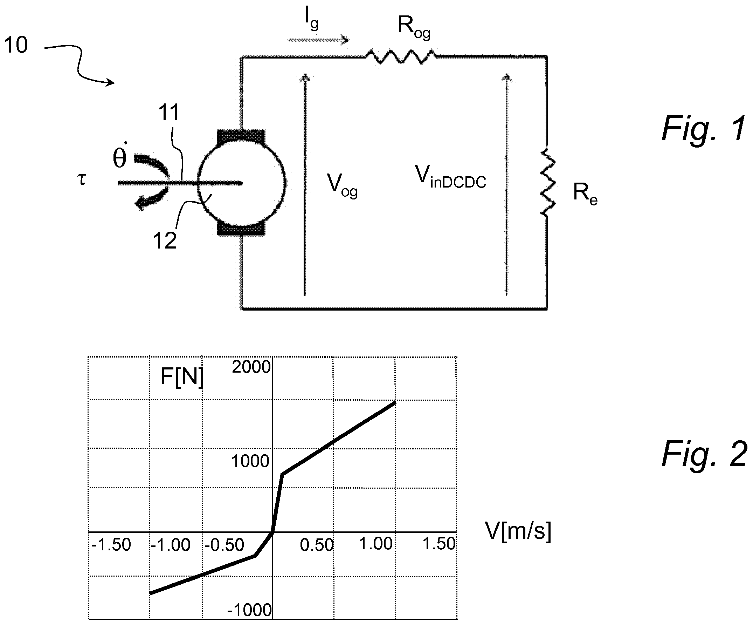

Illustrated in Figure 1 is a diagram representing an electro-mechanical model of a known energy-recovery apparatus, designated as a whole by the reference number 10. Designated by 11 is a shaft of an electric generator 12, associated to which are an angular velocity $\dot{\theta}$ and a torque $\tau$. $R_{og}$ designates the output resistance of the electric generator 12, for example a direct-current generator, whereas designated by $R_e$ is the equivalent resistance of the circuits of the portion of apparatus downstream of the electric generator 12, i.e., the resistance seen by the electric generator 12, this portion of apparatus comprising, for example, the aforementioned DC/DC converter. Designated by $V_{og}$ is the no-load voltage of the electric generator 12, designated by $I_g$ is the current of the generator 12, and designated by $V_{inDCDC}$ is the voltage that is set up on the equivalent resistance $R_e$.

On the hypothesis of steady-state conditions, i.e., zero angular acceleration ($0=0$), neglecting the inertia of the rotor and the inductance of the windings of the electric motor 12 we have, in a known way

$$\ddot{\theta} = 0$$
$$\tau = k_t \times I_g \qquad I_g = \frac{V_{og}}{R_{og} + R_e} \qquad C_m = \frac{\tau}{\dot{\theta}} = \frac{k_t \times k_e}{R_{og} + R_e}$$
$$V_{og} = k_e \times \dot{\theta}$$

$$(1)$$

Designated by $k_t$ is a constant of proportiona between the torque $\tau$ of the shaft 11 and the current $I_g$ of the generator 12. Designated by $k_e$ is a constant of proportionality between the no-load voltage $V_{og}$ of the generator 12 and the angular velocity $\dot{\theta}$ of the shaft 11.

Designated by $C_m$ is a coefficient of mechanical damping of the shaft 11, which is proportional to the damping of the shock absorber and inversely proportional to the value of the equivalent resistance $R_e$.

Consequently, from the foregoing discussion it follows that it is possible to control the damping $C_m$ of the shock absorber by acting on the equivalent resistance $R_e$ seen by the electric generator 12.

The fact of having to act on the equivalent resistance $R_e$ to control damping prevents, however, the possibility of operating, as in other energy-harvesting systems, by matching the impedance of the DC/DC converter to the output impedance of the electric generator 12 to maximize power transfer. On the other hand, this matching would not be in any case effective, in so far as it has been proven that the mechanical energy that can be recovered from a shock absorber does not vary as the required damping varies, mainly being instead a function of the speed of the vehicle and of the roughness of the road surface.

Given the same conditions of speed of the vehicle and roughness of the road surface, the regenerative shock absorber can be considered as a generator of power that is recovered with an efficiency that depends upon the efficiency of conversion along the conversion chain. Since the losses on the output resistance of the generator $R_{og}$ decrease as the equivalent resistance $R_e$ increases, notwithstanding the aforementioned invariance of the recoverable mechanical energy with respect to the damping, the electrical energy effectively recovered is even so a function of the damping.

Figure 2 illustrates a diagram exemplifying the characteristic force, F, vs. velocity, v, of the piston rod of a shock absorber used on motor vehicles. This F-v characteristic in general is not set according to a purely linear law over the entire range of variation of the quantities involved, but rather has different slopes, i.e., different equivalent differential resistances in different regions of the diagram, for example different regions of values of velocity of the piston rod, and according to the direction of the velocity v, i.e., according to whether the shock absorber is in the compression phase or the extension phase. In Figure 2, for example, the F-v characteristic has substantially four regions with linear segments with four different slopes, two for negative values of the velocity v of the piston rod and two for positive values of the velocity v of the piston rod.

The energy-recovery apparatus that operates with the shock absorber must hence be able to recreate a force-velocity characteristic like the one illustrated in Figure 2, where at each point of work there corresponds a different efficiency of conversion and hence a different amount of energy recovered.

In order to operate in a context of this sort, it is known to adopt mainly two types of solution. In the first place, it is known to use energy-harvesting apparatuses based upon dual-stage DC/DC converters, which use a first DC/DC conversion stage coupled to the electric generator and controlled in input resistance so as to obtain the maximum power transfer. Set at output from the first stage is an energy-storage element, for example a capacitor, the voltage of which is not, however, controlled. It is not in fact possible to control simultaneously the input resistance and the output voltage of the DC/DC converter. Downstream of the capacitor there follows a second conversion stage that is controlled in output current, in so far as the accumulation element connected thereto is a battery, i.e., a voltage load. This dual-stage configuration presents critical aspects both from the standpoint of costs and from the standpoint of efficiency, the total efficiency being the product of the efficiency of the individual stages. Drawbacks are determined also by the need to search for a correct sizing of the central storage element for guaranteeing containment of the voltage that is set up thereon during transients.

The second type of known solution envisages the use of switched resistors governed via PWM (Pulse Width Modulation) signals.

In particular, it is envisaged to use a DC/DC converter downstream of the generator, controlled in output voltage; i.e., the input resistance is not controlled. The equivalent load resistance seen by the electric generator is determined by switching at high frequency and according to specific strategies the output of the electric generator on an open circuit, or else a low-value resistance, or else a shortcircuit, and the input of the DC/DC converter. The low-value resistance can be used for dissipating the energy when the battery is charged. The switching strategies operate for determining an equivalent mean resistance, the value of which is set according to the desired damping.

This solution presents, however, the drawback of having the generator connected to the converter only for part of the time; hence, the recovery of the energy available occurs only partially. Furthermore, the programming of the resistance enables setting of only a unique damping value, determining linear force-velocity characteristics over the entire range of operation of the shock absorber.

Document US2010/072760 A1, which shows the preamble of claims 1 and 15, discloses a conversion apparatus in which the equivalent load resistance seen at the electric generator is determined switching at a high frequency and according to specific strategies the output of the electric generator on, respectively, an open circuit, a low resistance or a shortcircuit, and the converter input. Document US 2010/262308 discloses an apparatus similar to the one disclosed in the previous document, performing a controlled PWM switching on different loads. A similar system, although not applied to generative recovery in shock absorbers, is shown in document US 2004/206561.

The object of the present invention is to obtain an improved apparatus and method that will enable a better definition of the damping characteristic, with the possibility of control also in real time, and that at the same time will enable increase in the efficiency of conversion. Furthermore, the aim is to provide an apparatus having a lower complexity and lower cost.

According to the present invention, the above object is achieved thanks to an apparatus, as well as to a corresponding method, having the characteristics recalled specifically in the ensuing claims.

The invention will be described with reference to the annexed drawings, which are provided purely by way of non-limiting example and in which:

- Figure 1 is a diagram representing an electro-mechanical model of a known energy-recovery apparatus;
- Figure 2 is a diagram representing a force-velocity characteristic implemented by known shock absorbers;

- Figure 3 is a diagram representing an electro-mechanical model of an apparatus for obtaining predetermined damping characteristics and simultaneous energy recovery in regenerative shock absorbers according to the invention;
- Figure 4 is a schematic illustration of an implementation of a current generator of the model of Figure 3;
- Figure 5 is a block diagram of a first embodiment of a control loop implemented by the apparatus according to the invention;
- Figure 6 is a block diagram of a second embodiment of the control loop implemented by the apparatus according to the invention;
- Figure 7 is a principle circuit diagram of a current generator implemented in the embodiment of Figure 6;
- Figure 8 is an example of circuit of a DC/DC converter used by the apparatus according to the invention;
- Figure 9 shows diagrams of waveforms of the converter of Figure 8; and
- Figure 10 is a block diagram of an implementation of the apparatus according to the invention on a motor vehicle.

In brief, the solution according to the invention regards an apparatus for obtaining predetermined damping characteristics and simultaneous energy recovery in regenerative shock absorbers, in particular an apparatus for control, via energy recovery, of the damping characteristics of a shock absorber, which envisages a transformation of the linear motion of the piston rod of a shock absorber into a rotary motion of the shaft of an electric generator, the apparatus comprising a stage for DC/DC conversion of electrical energy configured for converting the voltage of the electric generator for an accumulation element, in particular a battery, where the conversion stage comprises a converter configured for operating as a current generator both when seen by the electric generator and when seen by the battery, and specifically configured for controlling via a control module the value of its own input current, which represents the current load of the electric generator, and for operating as generator of a charging current in regard to the battery. The control module implements a control loop for regulating the value of input current, which preferably comprises a damping-regulation module configured for supplying, as reference of the control loop, with respect to which said input current is to be regulated, values of reference input current as a function of the voltage of the electric generator that identify a law of variation (force vs. velocity of the piston rod) of damping of the shock absorber, in particular values proportional thereto.

The solution according to the invention stems in fact from the consideration that corresponding to the force-velocity (F-v) characteristic of the piston rod of the shock absorber is a torque-angular velocity characteristic of the shaft 11, whilst corresponding to the latter is a current-voltage characteristic in the windings of the generator 12, as indicated in Eqs. (1). As discussed with reference to Figure 1, if the proportionality is direct, it is possible to define an equivalent resistance $R_e$. In the more general case, in to control the damping characteristic the procedure is hence to obtain a function of the current supplied by the generator $I = f(v)$ such as to generate an equivalent function $\tau = f(\dot{\theta})$ that links the torque $\tau$ to the angular velocity $\dot{\theta}$, and consequently the desired relation between the force and the velocity of the piston rod of the shock absorber. As a result, the characteristic of Figure 2 can be regarded, but for scaling factors, as the reference curve of a current $I_g$ at output from the electric generator 12 as a function of the no-load voltage $V_{og}$ of the electric generator 12 itself.

The output current $I_g$ of the generator 12 must hence be controlled as a function of the no-load voltage $V_{og}$ according to a law corresponding to the law described in the force-velocity characteristic, for example, the law described in Figure 2. This law is set in the apparatus according to the invention in the control part, namely, in a control module, for example a microprocessor control module, in particular in the software of this module, for example, via equations or look-up tables.

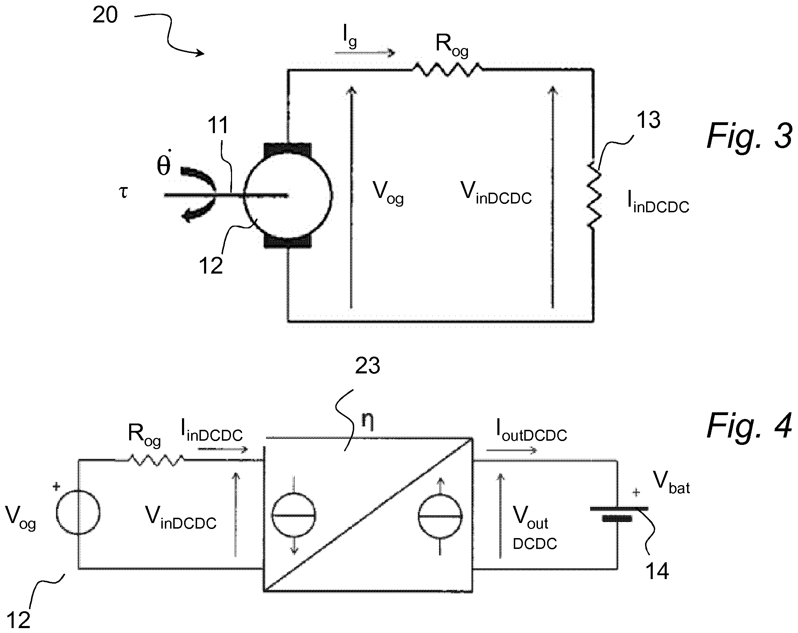

Figure 3 is a schematic illustration of an electro-mechanical model of an apparatus for obtaining predetermined damping characteristics and simultaneous energy recovery in regenerative shock absorbers according to the invention.

The above model, designated by 20, corresponds to the model of Figure 1, as regards the portion corresponding to the shaft 11 and to the electric generator 12, with its own output resistance $R_{og}$. However, downstream of the output resistance $R_{og}$ the equivalent resistance $R_e$ is here replaced by an equivalent current generator 13, which forces an equivalent input current $I_{inDCDC}$ into the circuit and on which there is an input-voltage drop $V_{inDCDC}$.

We thus have for the output current $I_g$ of the electric generator 12 and for its no-load voltage, respectively,

$$I_g = I_{inDCDC}$$
$$V_{og} = V_{inDCDC} + R_{og} \times I_{inDCDC}$$

$$(2)$$

The current generator 13 of Figure 3 is obtained via a DC/DC converter 23, as illustrated schematically in Figure 4, controlled in input current according to the law appearing above in Eqs. (2). The output of the DC/DC converter 23 is directly connected to an accumulation element, specifically a battery 14, without any need for a second stage, since, as will be clarified more fully in what follows where the mode of control of the DC/DC converter 23 is described, the converter 23 behaves like a current generator.

Given that the DC/DC converter according to the invention is regulated in input current, it is not regulated in output current. The main purpose of the apparatus according to the invention is not in fact regulation of charging of the battery 14, but rather subtraction of load from the electric generator 12, the regulator of which maintains the voltage stable, supplying a current lower than the current that it would have to supply in the absence of energy recovery. It is possible to envisage, additionally, a circuit for dissipation on an external resistor for the cases where the battery 14 is completely charged and the power regenerated by the shock absorbers is higher than that required by the electrical/electronic system of the vehicle.

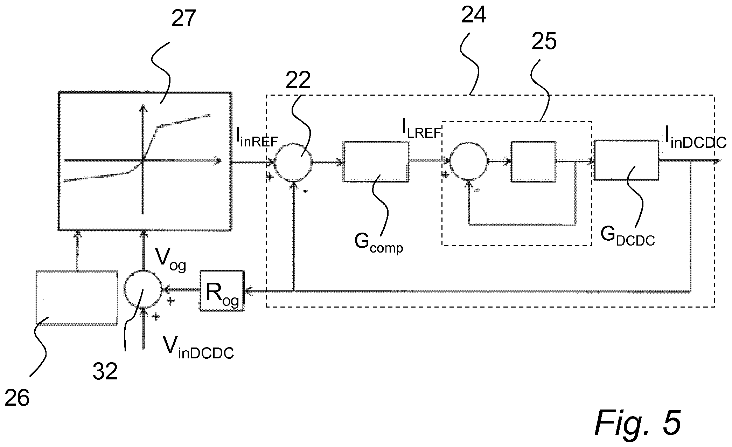

Figure 5 illustrates a block diagram of the control loop implemented by the apparatus according to the invention. This control loop is implemented in a control module 21, which can be obtained, for example, via the control unit of the motor vehicle or some other microcontroller.

Designated by 27 is a damping-regulation module, in particular a look-up table (LUT), comprised in the above control module 21, which contains the force-velocity characteristic to be implemented and supplies, by receiving at input values of no-load voltage $V_{og}$, corresponding values of reference input current $I_{inREF}$ that enable, according to what is indicated in Eqs. (1) and (2), a given torque-angular velocity characteristic to be obtained.

The no-load voltage $V_{og}$, calculated by measuring the voltage and the current at input to the DC/DC converter 13, is hence supplied as input value to the LUT 27 to obtain the above reference input current $I_{inREF}$. Moreover provided is a rebound-compression sensor 26, i.e., for example a shock-absorber-stroke sensor, which measures the relative displacement of the two ends of the shock absorber in a continuous way, and is, for example, of a variable-resistance type, the presence of which is necessary in the case of mechanical rectification, i.e., if the rotor of the generator 12 is made to turn always in the same direction. In this case, which is the most efficient, the output voltage of the electric generator 12 is always positive, and hence does not in itself provide indications on the direction of the velocity of the piston rod of the shock absorber. For this purpose, it is thus possible to use a piston-rod-stroke sensor on each shock absorber and obtain the velocity of the piston rod through a time derivative. A similar problem exists if the rectification, instead of being mechanical, is electrical, for example, if an AC generator with diode rectifier is used.

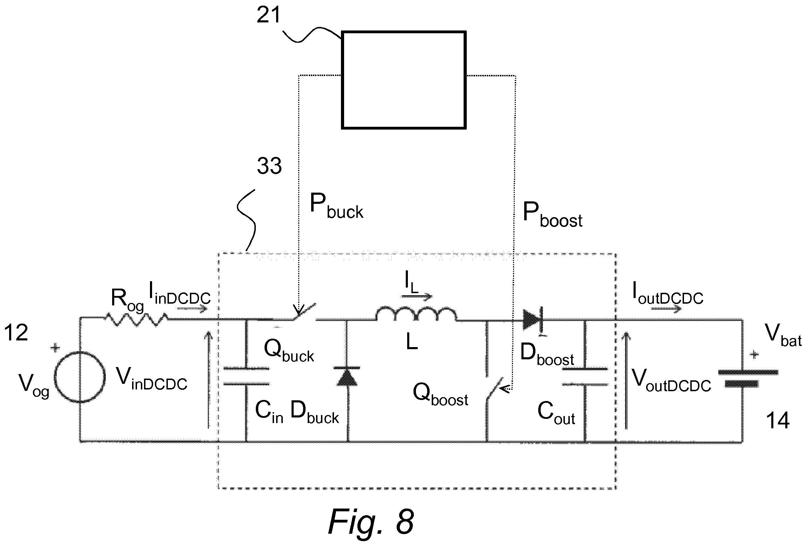

The control comprises an external regulation loop 24 for regulating the input current $I_{inDCDC}$, the of error which, i.e., the difference between the reference input current $I_{inREF}$ and the aforesaid input current $I_{inDCDC}$ fed back from the output of the loop 24, which is calculated in an adder node 22, is supplied to a compensation network with gain $G_{comp}$, which carries out amplification and compensation in order to generate a reference current of the inductor $I_{LREF}$ as reference signal for an internal loop 25, obtained with cycle-by-cycle modulation techniques, for example in hysteretic mode , peak-current mode or some other mode, which is aimed at regulating the current $I_L$ that flows in an inductor, designated by L in Figure 8, typically used as energy-storage and/or filtering element in multiple types of DC/DC converters 23. The aforesaid current in the inductor $I_L$ results in an input current $I_{inDCDC}$ according to a transfer function $G_{DCDC}$ of the converter 23, the form of which hence depends upon the converter topology used.

The input current $I_{inDCDC}$ at output from the external feedback loop 24 is supplied, multiplied by the no-load resistance of the generator 12, $R_{og}$, to an adder 32 where it is added to the input voltage $V_{inDCDC}$ to obtain the no-load voltage $V_{og}$ to be supplied as input of the regulation module 27.

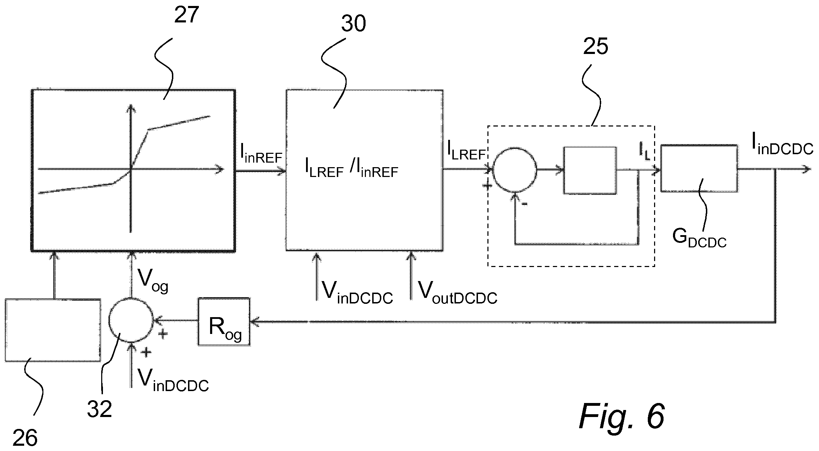

Figure 6 illustrates a second embodiment of a control model in the control module 21 implemented by the apparatus according to the invention, where the external feedback of the input current $I_{inDCDC}$ at the node 22, i.e., the external loop 24 of Figure 5, is eliminated and is replaced by a regulation of a feed-forward type based upon a model of the converter, as described in greater detail in what follows. This second embodiment has a lower precision, and, according to the model used, may present greater variability with respect to operating conditions such as, for example, temperature. However, it presents the advantage of a very wide band, limited only by the reactive components used, in particular by the inductor of the DC/DC converter. The first embodiment of Figure 5, instead, owing to the presence of the external feedback loop 24 provided with the necessary compensation network $G_{comp}$, considerably reduces the band of the apparatus.

Hence, in the embodiment of Figure 6, the value of the reference input current $I_{inREF}$ determined by the damping-regulation module 27 is directly supplied to a feed-forward regulation module 30, which also receives the input voltage $V_{inDCDC}$ and an output voltage $V_{outDCDC}$ that is the output voltage of the apparatus according to the invention, i.e., the voltage for charging the battery, as described in greater detail hereinafter with reference to Figure 8. On the basis of the above inputs, the feed-forward regulation module 3 calculates a value of the reference current in the inductor $I_{LREF}$ on the basis of a model of the DC/DC converter used. In other words, the feed-forward regulation module 30 defines, for example also this via a LUT, the function that, for the specific DC/DC converter used, links the reference current in the inductor $I_{LREF}$ to the values of the input voltage $V_{inDCDC}$, the output voltage $V_{outDCDC}$, and the reference input current $I_{inREF}$ on the converter.

In what follows, with reference to the embodiment of the converter 33 of Figure 8, appearing in the third column of Table 2 are, for different operating modes, expressions of the above function ($I_{LREF}/I_{inREF}$). The feed-forward regulation module 30 calculates the value of the reference current of the inductor $I_{LREF}$ to be supplied directly to the internal loop 25 on the basis of the values of the reference current $I_{inREF}$, of the input voltage $V_{inDCDC}$, and of the output voltage $V_{outDCDC}$.

Also in this case, the regulated input current $I_{inDCDC}$ is supplied, multiplied by the no-load resistance of the generator 12, $R_{og}$, to the adder 32, where it is added to the input voltage $V_{inDCDC}$ to obtain the no-load voltage $V_{og}$ to be supplied at input to the regulation module 27.

In addition to the embodiment of Figure 5 and 6, likewise possible are mixed solutions, for example, a solution with dual loop and with an additional feed-forward action for the purposes of an increase of the band, or else a solution with just the fast internal loop 25 that uses correction strategies that exploit the information on the input current $I_{inDCDC}$, which is in any case present for estimation of the no-load voltage $V_{og}$.

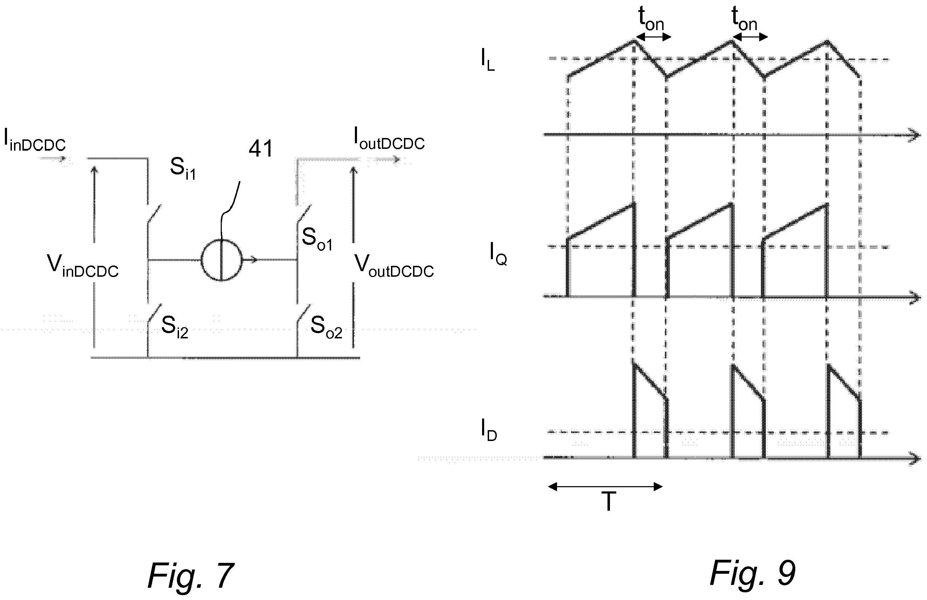

In any case, a common and important element of the embodiments that implement the solution according to the invention is the presence of a central core comprising the fast internal current-regulation loop, 25, operating in current mode or in hysteretic mode or other modes based upon cycle-by-cycle control. This configuration, as compared to other modulation and control techniques, for example the voltage mode, is more suitable for the purposes of the apparatus according to the invention, in so far as it requires control of an input current, i.e., a current load, and a current generator as output stage. Irrespective of the topology used and of the high-level control strategy, as discussed, it is possible to consider the converter 23, as illustrated in Figure 7, as being equivalent to a d.c. internal generator 41, neglecting the switching ripple, set in a bridge topology where the generator 41 is switched in an alternating way by input switches $S_{i1}$, $S_{i2}$ and output switches $S_{o1}$, $S_{o2}$, in particular at the switching frequency, between the input (voltage $V_{inDCDC}$ and current $I_{inDCDC}$) and the output (voltage $V_{outDCDC}$ and current $I_{outDCDC}$), according to modalities that depend upon the specific topology adopted, hence providing in an intrinsic way the load and the current generator. Usually, the switches $S_{i1}$, $S_{i2}$, $S_{o1}$, $S_{o2}$ are driven in PWM mode with a duty cycle $\delta$ that is varied for controlling, in this case, the value of the current in the inductor $I_L$ and hence the input current $I_{inDCDC}$. The internal loop 25 consists of a comparator circuit that compares the measurements of the instantaneous current in the inductor $I_L$ with a reference threshold. When this threshold is exceeded, the switches of the converter are driven into an OFF condition. The ON state is set in different modes according to the type of control.

The switches $S_{i1}$, $S_{i2}$, $S_{o1}$, $S_{o2}$ in Figure 7 represent a generic switching operation, but in general operate in a different way according to the specific topology of converter adopted, as discussed, for example, with reference to Figure 8, maintaining the nature of current conversion exemplified in Figure 7 constant. This nature enables:

- the behaviour as current load at input, as required by the need to modulate the forces acting on the piston rod of the shock absorber; and
- the behaviour as current generator at output, as required by the need to connect the four conversion branches, one for each shock absorber, to a single battery.

In order to describe the operation of the DC/DC converter 23 according to the invention, reference is here made to three basic topologies, i.e., three switching modes of the bridge topology illustrated in Figure 7. Of course, in variant embodiments, it is possible to use also other topologies.

The above three topologies are:

- buck (only step-down, i.e., for output voltages lower than the input voltage);
- boost (only step-up, i.e., for output voltages higher than the input voltage); and
- buck-boost (not polarity-inverting, operating with output voltages that may be either lower or higher than the input voltage).

Figure 8 represents an example of circuit 33 of the DC/DC converter 23, i.e., a buck-boost circuit that can operate in each of the above three modalities according to driving of specific switches.

Specifically, given the generator 12 with no-load voltage $V_{og}$ and no-load resistance $R_{og}$, the DC/DC converter comprises an input capacitance $C_{in}$, between the output terminal of the generator 12, or input terminal of the converter 23, where the input current $I_{inDCDC}$ is sent at input, and ground. On said input capacitance $C_{in}$ there is the input-voltage drop $V_{inDCDC}$. A buck-mode switch $Q_{buck}$ in series separates the input terminal of the converter 33 from a buck diode $D_{buck}$, set between the buck-mode switch $Q_{buck}$ and ground, with its anode connected to ground. Connected to the cathode of the buck diode $D_{buck}$ is a storage and filtering inductor L through which the inductor current $I_L$ flows. The other terminal of the storage and filtering inductor L is connected towards ground through a boost switch $Q_{boost}$ and to the anode of a boost diode $D_{boost}$. The cathode of the boost diode $D_{boost}$ is connected to an output terminal of the DC/DC converter 33. Connected between the output terminal and ground is an output capacitor, $C_{out}$, in parallel to the battery 14, which receives the output current from the output terminal, $I_{outDCDC}$, and the output voltage $V_{outDCDC}$ present on the output terminal itself. Hence, from this figure it may be appreciated how the converter 23 has its own input, in particular the input where the input current enters, in particular upstream of the input capacitor $C_{in}$ that is stably connected to the generator 12 and, as has already been said, its own output directly and stably connected to the battery 14, in particular downstream of the output capacitor $C_{out}$, without interposition of a second conversion stage.

The buck diode $D_{buck}$ and boost diode $D_{boost}$ may possibly be replaced by switches, for example MOSFETs, enabling synchronous rectification, with an increase in efficiency, and possibly bidirectional use of the converter.

On the output terminal of the converter 33 there may be provided a filter for reducing the ripple on the output current $I_{outDCDC}$ that enters the battery 14.

Appearing in Table 1 below are the states of the switches and of the diodes according to which of the three modes of use is to be adopted.

**Table 1**

| Operating mode | $Q_{buck}$ | $Q_{boost}$ | $D_{buck}$ | $D_{boost}$ |
|---|---|---|---|---|
| Buck | PWM | OFF | $\overline{PWM}$ | ON |
| Boost | ON | PWM | OFF | $\overline{PWM}$ |
| Buck-Boost | PWM | PWM | $\overline{PWM}$ | $\overline{PWM}$ |

The signals for obtaining the modes indicated in Table 1 are supplied to the respective switches $Q_{buck}$ and $Q_{boost}$ by the control module 21, which sends respective control signals $P_{buck}$ and $P_{boost}$. These control signals $P_{buck}$ and $P_{boost}$ may hence consist of a modulation of a PWM type with a duty cycle $\delta$ that determines the parameters of the conversion, such as the ratios between the input voltage and output voltage of the converter, mean current values, and in particular, with reference to the feed-forward regulation module 30, the ratio between the reference inductor current $I_{LREF}$ and the inductor current $I_L$, as indicated hereinafter by way of example in Table 2.

Figure 9 illustrates waveforms corresponding to the current in the inductor L, $I_L$, to the currents $I_Q$ in the switches $Q_{buck}$ and $Q_{boost}$ and to the currents $I_D$ in the diodes $D_{buck}$, $D_{boost}$ as a function of time, with the corresponding period T and on-time $t_{on}$. These waveforms are the same; what changes, instead, for each topology are the duty cycles $\delta = t_{on}/T$ as a function of the input and output voltages, as illustrated in Table 2 below which gives, for each mode, the duty cycle $\delta$, the mean output current $I_{outm}$, the mean input current $I_{inm}$, and the ratio between the reference input current $I_{inREF}$ and the reference current of the inductor $I_{LREF}$, i.e., the transfer function implemented by the feed-forward regulation module 30 of Figure 6 for determining the reference current of the inductor $I_{LREF}$ to be supplied to the internal loop 25.

**Table 2**

| Mode | $\delta$ | $I_{outm}$ | $I_{inm}$ | $I_{LREF}/I_{inREF}$ |
|---|---|---|---|---|
| Buck | $\dfrac{V_{outDCDC}}{V_{inDCDC}}$ | $I_L$ | $\dfrac{V_{outDCDC}}{V_{inDCDC}} \times I_L$ | $\dfrac{V_{inDCDC}}{V_{outDCDC}}$ |
| Boost | $1 - \dfrac{V_{outDCDC}}{V_{inDCDC}}$ | $\dfrac{V_{inDCDC}}{V_{outDCDC}} \times I_L$ | $I_L$ | $1$ |
| Buck-Boost | $\dfrac{V_{outDCDC}}{V_{inDCDC} + V_{outDCDC}} \times I_L$ | $\dfrac{V_{outDCDC}}{V_{inDCDC} + V_{outDCDC}} \times I_L$ | $\dfrac{V_{outDCDC}}{V_{inDCDC} + V_{outDCDC}} \times I_L$ | $\dfrac{V_{inDCDC}}{V_{inDCDC} + V_{outDCDC}}$ |

The expressions appearing in Table 2 are provided purely by way of example in so far as they refer to the ideal case (conversion efficiency $\eta = 1$) and to CCM (continuous-current mode) operation.

It is clear that the converter 33 of Figure 8 represents a particularly versatile example of a converter, but in general it is possible to use converters that operate only in buck mode, boost mode, or buck-boost mode, for example using in a fixed way the corresponding configurations of Table 1 and substituting shortcircuits for the switches that are indicated as closed and open circuits for the switches that are open.

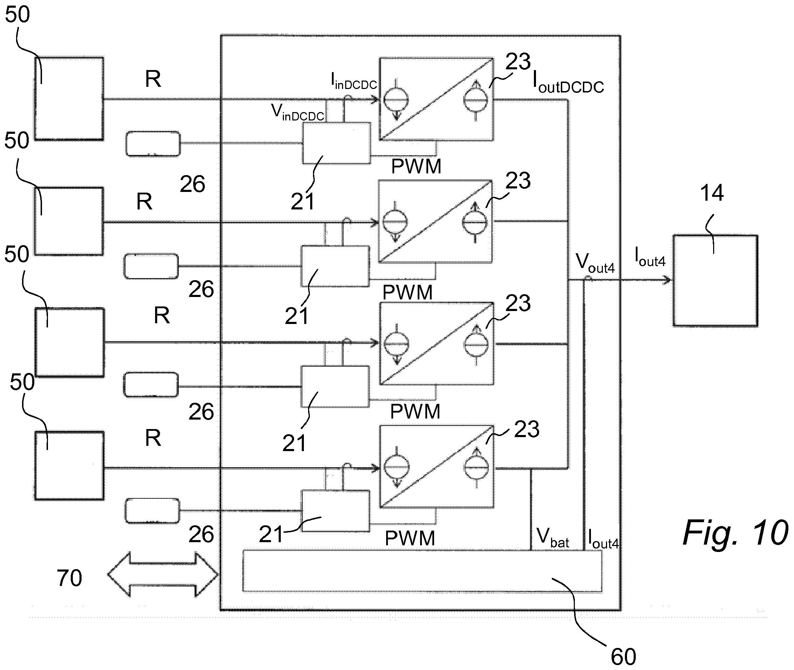

Figure 10 shows a block diagram of an implementation of the apparatus according to the invention on a motor vehicle, applied to four shock absorbers, 50, one for each wheel of the motor vehicle, each of which identifies a respective conversion branch R and is associated to a respective rebound-compression sensor 26. In Figure 10 it is understood that each shock absorber 50 is associated to the respective generator 12; consequently, on each conversion branch R the input voltages $V_{inDCDC}$ and input currents $I_{inDCDC}$ are provided, which are supplied to a respective converter 23. Each converter 23 comprises a respective control module 21, which measures the input voltage and current and supplies the PWM signal to the converter 23.

Each converter 33 then supplies its own output current $I_{outDCDC}$ to the battery 14.

The apparatus also comprises a supervisor module 60, which is connected to a CAN network 70 of the motor vehicle and has the task of monitoring the overall output voltage $V_{out4}$ of the apparatus, i.e., the battery voltage $V_{bat}$, and the overall output current $I_{out4}$, i.e., the current that charges the battery 14. The control module 21 and the supervisor module 60 may conveniently be implemented within one and the same control unit comprising the DC/DC converter. Of course possible are different architectural configurations for the control and supervision modules.

Hence, the advantages of the solution emerge clearly from the foregoing description.

Advantageously, the apparatus and method according to the invention determine an always active recovery, enabling an increase of the conversion efficiency, notwithstanding the fact that it is possible to define a damping characteristic that is differentiated between the compression and extension phases, as well as being a function of the velocity of the piston rod moreover with possibility of real-time control. This makes it possible to provide advanced strategies of control of the vehicle dynamics.

The apparatus according to the invention is moreover an apparatus with low complexity and low cost thanks to the adoption of an architecture based upon a single-stage DC/DC converter, i.e., one that does not use two or more stages, which does not use a device for modulation, over time intervals, of the value of the load charge resistance of the generator.

Of course, without prejudice to the principle of the invention, the details of construction and the embodiments may vary widely with respect to what has been described and illustrated herein purely by way of example, without thereby departing from the scope of the present invention.

As mentioned above, the apparatus according to the invention may be configured for setting the law of variation of damping of the shock absorber for controlling the dynamics of the vehicle. For example, the apparatus may be configured for setting, in particular in real time, the damping characteristic, for example, in a differentiated way between steps of compression and extension of the shock absorber and/or as a function of the velocity of the piston rod.

According to variant embodiments, the apparatus is configured for providing different stored laws of variation of the damping of the shock absorber suitable for different types of condition of the ground or conditions of travel of the motor vehicle and for loading into the control module the corresponding law of variation following manual selection by the driver using purposely provided input means or else automatically, for example as a function of data transmitted by one or more sensors, for example sensors of speed of the vehicle and/or accelerometers that measure the vibrations or accelerations along different axes of the vehicle, or else also position and/or navigation sensors that enable information to be obtained on the conditions of the roads along which the vehicle is travelling, for example the roughness of the road surface. Loading of different laws of variation of damping, as has been said, may envisage loading complete laws of variation of damping, preferably designed by persons skilled in the art, even though not excluded is the possibility of direct setting by the user via a purposely provided interface, stored in a memory available in the apparatus, or even in the same memory as the one that houses the look-up table in which the active law is stored.

According to variant embodiments, the law of variation of damping will not necessarily be constituted by straight segments joined to form a broken line, but may comprise segments of curve, for example of parabola, of cubic or of spline curves, or be even altogether without rectilinear segments.

**Claims**

1. An apparatus configured to obtain predetermined damping characteristics and perform a simultaneous energy recovery in a regenerative shock absorber that comprises a transformation of the linear motion of the piston rod of a shock absorber into a rotary motion of the shaft (11) of an electric generator (12), said apparatus comprising a DC/DC conversion stage (23; 33), configured for converting the voltage of said electric generator (12) for an accumulation element (14), in particular a battery, wherein said conversion stage comprises a converter (23; 33), wherein the input of said converter (23; 33) is arranged connected to the generator (12) and its output is directly connected to the accumulation element (14), **characterized in that** said converter (23; 33) is configured for controlling, via a control module (21), the value of its own input current ($I_{inDGDC}$), regulating said input current ($I_{inDCDC}$), and not the output current, and for operating as a generator of charging current ($I_{outDCDC}$) with respect to said accumulation element (14).

2. The apparatus according to Claim 1, **characterized in that** the converter (23) has its own input stably connected to the generator (12) and its own output directly and stably connected to the accumulation element (14), without interposition of a further conversion stage.

3. The apparatus according to Claim 1, **characterized in that** said converter (23; 33) is configured for operating as a charging-current generator in regard to said accumulation element (14), said converter (23; 33) being regulated in input current, and not in output current, said converter being associated to a control module (21) that implements a control loop for regulating the value of said input current of the converter.

4. The apparatus according to Claim 1, **characterized in that** said control module (21) implements a control model (24, 25; 30, 25) for regulating said value of input current ($I_{inDCDC}$) comprising a damping-regulation module (27) configured for supplying, as reference of the control loop with respect to which said input current ($I_{inDCDC}$) is to be regulated, values of reference input current ($I_{inREF}$) as a function of the voltage ($V_{og}$) of the electric generator (12) that identify a law of variation (F-v) of damping of the shock absorber, in particular values proportional to said law.

5. The apparatus according to Claim 4, **characterized in that** said control model comprises a fast current-regulation loop (25), in particular operating in current mode or hysteretic mode or other cycle-by-cycle regulation modes, which regulates a current ($I_L$) that flows in an energy-storage or filtering element, in particular an inductor, (L) in the DC/DC converter (23; 33), said input current ($I_{inDCDC}$) being a function of said current (IL) that flows in a energy-storage element (L) according to a transfer function ($G_{DCDC}$) of the converter (23; 33).

6. The apparatus according to Claim 5, **characterized in that** it is configured for supplying to said fast regulation loop (25) a respective reference value ($I_{LREF}$) obtained from said reference input current ($I_{inREF}$) via an external feedback control loop (24) configured for calculating an error between said reference input current ($I_{inREF}$) and said input current ($I_{inDCDC}$).

7. The apparatus according to Claim 5, **characterized in that** it is configured for supplying to said fast regulation loop (25) a respective reference value ($I_{LREF}$) obtained from said reference input current ($I_{inREF}$) via a regulation of a feed-forward type carried out via a module (30) configured for calculating a value of the reference current in an energy-storage or filtering element, in particular an inductor ($I_{LREF}$), on the basis of a model of the DC/DC converter (23; 33) used, in particular on the basis of a function of the input voltage ($V_{inDCDc}$), of the output voltage ($V_{outDCDC}$), and of the reference input current ($I_{inREF}$) of said converter (23; 33).

8. The apparatus according to Claim 1 or any one of the subsequent claims, **characterized in that** said conversion stage (23) is a monostage.

9. The apparatus according to Claim 5, **characterized in that** said converter (33) comprises a buck-boost circuit configured for operating in buck, boost, or buck-boost mode according to the driving of specific switches ($Q_{buck}$, $Q_{boost}$).

10. The apparatus according to Claim 1 or any one of the subsequent claims, **characterized in that** it is associated to a shock absorber (50) of a wheel of a motor vehicle, in particular to the piston rod of said shock absorber (50).

11. The apparatus according to Claim 10, **characterized in that** it is comprised in one of a plurality of conversion branches (R), one for each shock absorber of a motor vehicle, which carry out charging of a single battery.

12. The apparatus according to Claim 4 or any one of the subsequent claims, **characterized in that** it is configured for setting said law of variation (F-v) of the damping of the shock absorber so as to control the dynamics of the vehicle.

13. The apparatus according to Claim 12, **characterized in that** it is configured for setting said law of variation (F-v) of the damping of the shock absorber so as to control the dynamics of the vehicle by defining said damping characteristic in a differentiated way between phases of compression and extension of the shock absorber and/or as a function of the velocity of the piston rod.

14. The apparatus according to Claim 12 or Claim 13, **characterized in that** it is configured for setting said law of variation (F-v) of the damping of the shock absorber by loading different laws of variation of the damping of the shock absorber (50), in particular following upon manual selection or else automatically, in particular as a function of data transmitted by one or more sensors.

15. A method for obtaining predetermined damping characteristics and performing a simultaneous energy recovery in a regenerative shock absorber, said method envisaging a transformation of the linear motion of the piston rod of a shock absorber into a rotary motion of the shaft (11) of an electric generator (12), via an operation of DC/DC conversion of the voltage of said electric generator for an accumulation element, in particular a battery (14), said method being **characterized in that** said operation of DC/DC conversion comprises carrying out a DC/DC conversion (23), controlling the input current ($I_{inDCDC}$) regulating said input current ($I_{inDCDC}$), and not the output current, and operating as a current generator (13) in regard to said accumulation element (14).

**Patentansprüche**

1. Vorrichtung, dafür konfiguriert, vorbestimmte Dämpfungseigenschaften zu erzielen und eine gleichzeitige Energierückgewinnung in einem regenerativen Stoßdämpfer durchzuführen, der eine Umwandlung der Linearbewegung der Kolbenstange eines Stoßdämpfers in eine Drehbewegung der Welle (11) eines elektrischen Generators (12) aufweist, welche Vorrichtung eine Gleichspannungswandlerstufe (23; 33) aufweist, die dafür konfiguriert ist, die Spannung des elektrischen Generators (12) für ein Sammelelement (14), insbesondere für eine Batterie umzuwandeln, wobei die Wandlerstufe einen Wandler (23; 33) aufweist, wobei der Eingang des Wandlers (23; 33) in Verbindung mit dem Generator (12) angeordnet ist und sein Ausgang direkt mit dem Sammelelement (14) verbunden ist, **dadurch gekennzeichnet, dass** der Wandler (23; 33) dafür konfiguriert ist, über ein Regelmodul (21) den Wert seines eigenen Eingangsstroms ($I_{inDCDC}$) zu regeln, wobei der Eingangsstrom ($I_{inDCDC}$) und nicht der Ausgangsstrom reguliert wird, und als ein Generator von Ladestrom ($I_{outDCDC}$) in Bezug auf das Sammelelement (14) zu arbeiten.

2. Vorrichtung nach Anspruch 1, **dadurch gekennzeichnet, dass** der eigene Eingang des Wandlers (23) stabil mit dem Generator (12) verbunden ist und sein Ausgang direkt und stabil mit dem Sammelelement (14) ohne Zwischenschaltung einer weiteren Wandlerstufe verbunden ist.

3. Vorrichtung nach Anspruch 1, **dadurch gekennzeichnet, dass** der Wandler (23; 33) für den Betrieb als ein Ladestromgenerator in Bezug auf das Sammelelement (14) konfiguriert ist, wobei der Wandler (23; 33) über den Eingangsstrom und nicht den Ausgangsstrom reguliert wird, welcher Wandler mit einem Regelmodul (21) verbunden ist, das einen Regelkreis zum Regulieren des Wertes des Eingangsstroms des Wandlers implementiert.

4. Vorrichtung nach Anspruch 1, **dadurch gekennzeichnet, dass** das Regelmodul (21) ein Regelmodell (24, 25; 30, 25) zum Regulieren des Wertes des Eingangsstroms ($I_{inDCDC}$) implementiert, welches ein Dämpfungsregulierungsmodul (27) aufweist, das dafür konfiguriert ist, als Bezugsgröße des Regelkreises, auf welche bezogen der Eingangsstrom ($I_{inDCDC}$) reguliert werden soll, Werte eines Bezugs-Eingangsstroms ($I_{inREF}$) als eine Funktion der Spannung ($V_{og}$) des elektrischen Generators (12) zu liefern, die ein Gesetz der Variation (F-v) der Dämpfung des Stoßdämpfers identifizieren, insbesondere zu diesem Gesetz proportionale Werte.

5. Vorrichtung nach Anspruch 4, **dadurch gekennzeichnet, dass** das Regelmodell einen schnellen Stromregulierungskreis (25) aufweist, der insbesondere im Strommodus oder Hysteresemodus oder in anderen zyklusweisen Regulierungsmodi arbeitet, welcher einen Strom ($I_L$) reguliert, der in ein Energiespeicher- oder Filterelement, insbesondere in eine Induktivität (L) in dem Gleichspannungswandler (23; 33) fließt, wobei der Eingangsstrom ($I_{inDCDC}$) eine Funktion des in ein Energiespeicherelement (L) fließenden Stroms ($I_L$) gemäß einer Transferfunktion ($G_{DCDC}$) des Wandlers (23; 33) ist.

6. Vorrichtung nach Anspruch 5, **dadurch gekennzeichnet, dass** sie dafür konfiguriert ist, dem schnellen Regulierungskreis (25) einen jeweiligen Bezugswert ($I_{LREF}$) zu liefern, der aus dem Bezugs-Eingangsstrom ($I_{inREF}$) über einen externen Rückführungskreis (24) erhalten wird, der dafür konfiguriert ist, einen Fehler zwischen dem Bezugs-Eingangsstrom ($I_{inREF}$) und dem Eingangsstrom ($I_{inDCDC}$) zu berechnen.

7. Vorrichtung nach Anspruch 5, **dadurch gekennzeichnet, dass** sie dafür konfiguriert ist, dem schnellen Regulierungskreis (25) einen jeweiligen Bezugswert ($I_{LREF}$) zu liefern, der aus dem Bezugs-Eingangsstrom ($I_{inREF}$) über eine Regulierung mit Störgrößenaufschaltung erhalten wird, die über ein Modul (30) ausgeführt wird, das dafür konfiguriert ist, einen Wert des Bezugsstroms in einem Energiespeicher- oder Filterelement, insbesondere einer Induktivität ($I_{LREF}$) auf der Basis eines Modells des verwendeten Gleichspannungswandlers (23; 33), insbesondere auf der Basis einer Funktion der Eingangsspannung ($V_{inDCDC}$), der Ausgangsspannung ($V_{outDCDC}$) und des Bezugs-Eingangsstroms ($I_{inREF}$) des Wandlers (23; 33) zu berechnen.

8. Vorrichtung nach Anspruch 1 oder einem der nachfolgenden Ansprüche, **dadurch gekennzeichnet, dass** die Wandlerstufe (23) eine Monostufe ist.

9. Vorrichtung nach Anspruch 5, **dadurch gekennzeichnet, dass** der Wandler (33) eine Abwärts-Aufwärtswandlerschaltung enthält, die dafür konfiguriert ist, entsprechend der Ansteuerung von spezifischen Schaltern ($Q_{buck}$, $Q_{boost}$) im Abwärtswandler-, Aufwärtswandler- oder Inverswandler-Modus zu arbeiten.

**10.** Vorrichtung nach Anspruch 1 oder einem der nachfolgenden Ansprüche, **dadurch gekennzeichnet, dass** sie mit einem Stoßdämpfer (50) eines Rades eines Kraftfahrzeugs verbunden ist, insbesondere mit der Kolbenstange des Stoßdämpfers (50).

**11.** Vorrichtung nach Anspruch 10, **dadurch gekennzeichnet, dass** sie in einem einer Vielzahl von Umwandlungszweigen (R), wovon für jeden Stoßdämpfer eines Kraftfahrzeugs jeweils einer vorhanden ist, die das Laden einer einzelnen Batterie durchführen, enthalten ist.

**12.** Vorrichtung nach Anspruch 4 oder einem der nachfolgenden Ansprüche, **dadurch gekennzeichnet, dass** sie dafür konfiguriert ist, das Gesetz der Variation (F-v) der Dämpfung des Stoßdämpfers einzustellen, um so die Dynamik des Fahrzeugs zu steuern.

**13.** Vorrichtung nach Anspruch 12, **dadurch gekennzeichnet, dass** sie dafür konfiguriert ist, das Gesetz der Variation (F-v) der Dämpfung des Stoßdämpfers einzustellen, um so die Dynamik des Fahrzeugs zu steuern, indem die Dämpfungscharakteristik in einer differenzierten Weise zwischen Kompressionsphasen und Extensionsphasen des Stoßdämpfers und/oder als eine Funktion der Geschwindigkeit der Kolbenstange definiert wird.

**14.** Vorrichtung nach Anspruch 12 oder Anspruch 13, **dadurch gekennzeichnet, dass** sie dafür konfiguriert ist, das Gesetz der Variation (F-v) der Dämpfung des Stoßdämpfers einzustellen, indem verschiedene Gesetze der Variation (F-v) der Dämpfung des Stoßdämpfers (50) geladen werden, insbesondere auf eine manuelle Auswahl folgend oder andernfalls automatisch, insbesondere als eine Funktion von durch einen oder mehrere Sensoren übertragenen Daten.

**15.** Verfahren zum Erzielen von vorbestimmten Dämpfungscharakteristiken und zum Durchführen einer gleichzeitigen Energierückgewinnung in einem regenerativen Stoßdämpfer, welches Verfahren eine Umwandlung der Linearbewegung der Kolbenstange des Stoßdämpfers in eine Drehbewegung der Welle (11) eines elektrischen Generators (12) über einen Betrieb einer Gleichspannungsumwandlung der Spannung des elektrischen Generators für ein Sammelelement, insbesondere eine Batterie (14) vorsieht, welches Verfahren **dadurch gekennzeichnet ist, dass** der Betrieb der Gleichspannungswandlung die Durchführung einer Gleichspannungswandlung (23), die Regelung des Eingangsstroms ($I_{inDCDC}$) durch Regulieren des Eingangsstroms ($I_{inDCDC}$) und nicht des Ausgangsstroms und den Betrieb als Stromgenerator (13) in Bezug auf das Sammelelement (14) umfasst.

**Revendications**

**1.** Dispositif configuré pour obtenir des caractéristiques d'amortissement prédéterminées et effectuer une récupération simultanée d'énergie dans un amortisseur régénérateur qui comprend une transformation du mouvement linéaire de la tige de piston d'un amortisseur en un mouvement de rotation de l'arbre (11) d'un générateur électrique (12), le dispositif comprenant un étage de conversion DC/DC (23 ; 33) configuré pour convertir la tension du générateur électrique (12) pour un élément d'accumulation (14), notamment une batterie, l'étage de conversion comprenant un convertisseur (23 ; 33), l'entrée du convertisseur étant connectée au générateur (12) et sa sortie étant connectée directement à l'élément d'accumulation (14), **caractérisé en ce que** le convertisseur (23 ; 33) est configuré pour commander, par le biais d'un module de commande (21), la valeur de son propre courant d'entrée ($I_{inDCDC}$), pour réguler ce courant d'entrée ($I_{inDCDC}$) et non pas le courant de sortie et pour fonctionner comme un générateur de courant de chargement ($I_{outDCDC}$) par rapport à l'élément d'accumulation.

**2.** Dispositif selon la revendication 1, **caractérisé en ce que** l'entrée du convertisseur (23) est connectée de manière stable au générateur (12) et la sortie est connectée directement et de manière stable à l'élément d'accumulation (14), sans interposition d'un autre étage de conversion.

**3.** Dispositif selon la revendication 1, **caractérisé en ce que** le convertisseur (23 ; 33) est configuré pour fonctionner comme un générateur de courant de chargement par rapport à l'élément d'accumulation (14), le convertisseur (23 ; 33) étant régulé en ce qui concerne son courant d'entrée mais non pas son courant de sortie, le convertisseur étant associé à un module de commande (21) qui met en oeuvre une boucle de régulation pour réguler la valeur du courant d'entrée du convertisseur.

**4.** Dispositif selon la revendication 1, **caractérisé en ce que** le module de commande (21) met en oeuvre un modèle de commande (24, 25 ; 30, 25) pour réguler la valeur du courant d'entrée ($I_{inDCDC}$) comportant un module de régulation de l'amortissement (27) configuré pour fournir, comme une référence de la boucle de régulation par rapport à laquelle le courant d'entrée ($I_{inDCDC}$) doit être régulé, des valeurs de courant d'entrée de référence ($I_{inREF}$) en fonction de la tension ($V_{og}$) du générateur électrique (12) qui identifient une loi de variation (F-v) d'amortissement de l'amortisseur, notamment des valeurs proportionnelles à ladite loi.

5. Dispositif selon la revendication 4, **caractérisé en ce que** le modèle de commande comprend une boucle rapide de régulation de courant (25), fonctionnant notamment en un mode courant ou un mode hystérétique ou d'autres modes de régulation cycle par cycle, qui régule un courant ($I_L$) passant par un élément de stockage d'énergie ou de filtre, notamment un inducteur (L) dans le convertisseur DC/DC (23 ; 33), le courant d'entrée ($I_{inDCDC}$) étant une fonction du courant ($I_L$) qui passe dans un élément de stockage d'énergie (L) selon une fonction de transfert ($G_{DCDC}$) du convertisseur (23 ; 33).

6. Dispositif selon la revendication 5, **caractérisé en ce qu'**il est configuré pour fournir à la boucle rapide de régulation (25) une valeur de référence ($I_{LREF}$) respective obtenue par le courant d'entrée de référence ($I_{inREF}$) par le biais d'une boucle de commande à rétroaction extérieure (24) configurée pour calculer une erreur entre le courant d'entrée de référence ($I_{inREF}$) et le courant d'entrée ($I_{inDCDC}$).

7. Dispositif selon la revendication 5, **caractérisé en ce qu'**il est configuré pour fournir à la boucle rapide de régulation (25) une valeur de référence ($I_{LREF}$) respective obtenue par le courant d'entrée de référence ($I_{inREF}$) par le biais d'une régulation du type à commande prédictive mise en oeuvre par le biais d'un module (30) configuré pour calculer une valeur du courant de référence dans un élément de stockage d'énergie ou de filtre, notamment un inducteur ($I_{LREF}$), sur la base d'un modèle du convertisseur DC/DC utilisé, notamment sur la base d'une fonction de la tension d'entrée ($V_{inDCDC}$), de la tension de sortie ($V_{outDCDC}$) et du courant d'entrée de référence ($I_{inREF}$) du convertisseur (23 ; 33).

8. Dispositif selon la revendication 1 ou l'une quelconque des revendications suivantes, **caractérisé en ce que** l'étage de conversion (23) est un étage unique.

9. Dispositif selon la revendication 5, **caractérisé en ce que** le convertisseur (33) comprend un circuit « Buck + Boost » configuré pour fonctionner en mode « Buck », en mode « Boost » ou en mode « Buck + Boost » selon la commande par des commutateurs spécifiques ($Q_{buck}$, Qboost).

10. Dispositif selon la revendication 1 ou l'une quelconque des revendications suivantes, **caractérisé en ce qu'**il est associé à un amortisseur (50) d'une roue d'un véhicule à moteur, notamment à la tige de piston de l'amortisseur (50).

11. Dispositif selon la revendication 10, **caractérisé en ce qu'**il est un parmi une pluralité de branches de conversion (R), une pour chaque amortisseur d'un véhicule à moteur, qui effectuent le chargement d'une seule batterie.

12. Dispositif selon la revendication 4 ou l'une quelconque des revendications suivantes, **caractérisé en ce qu'**il est configuré pour ajuster la loi de variation (F-v) de l'amortissement de l'amortisseur de façon à régler la dynamique du véhicule.

13. Dispositif selon la revendication 12, **caractérisé en ce qu'**il est configuré pour ajuster la loi de variation (F-v) de l'amortissement de l'amortisseur de façon à régler la dynamique du véhicule en définissant la caractéristique d'amortissement de manière différente selon les phases de compression et d'extension de l'amortisseur et/ou en fonction de la vitesse de la tige de piston.

14. Dispositif selon la revendication 12 ou la revendication 13, **caractérisé en ce qu'**il est configuré pour ajuster la loi de variation (F-v) de l'amortissement de l'amortisseur en chargeant différentes lois de variation (F-v) de l'amortissement de l'amortisseur (50), notamment selon une sélection manuelle ou, sinon, automatique, notamment en fonction de données transmises par un ou plusieurs capteurs.

15. Procédé pour obtenir des caractéristiques d'amortissement prédéterminées et effectuer une récupération simultanée d'énergie dans un amortisseur régénérateur, le procédé prévoyant une transformation du mouvement linéaire de la tige de piston d'un amortisseur en un mouvement de rotation de l'arbre (11) d'un générateur électrique (12), via la mise en oeuvre d'une conversion DC/DC de la tension du générateur électrique pour un élément d'accumulation, notamment une batterie (14), le procédé étant **caractérisé en ce que** la mise en oeuvre de la conversion DC/DC comprend effectuer une conversion DC/DC (23), commander le courant d'entrée ($I_{inDCDC}$) en régulant le courant d'entrée ($I_{inDCDC}$) mais non pas le courant de sortie, et fonctionner comme un générateur de courant (13) par rapport à l'élément d'accumulation (14).

Fig. 1

Fig. 2

EP 2 821 265 B1

*Fig. 3*

*Fig. 4*

*Fig. 5*

*Fig. 6*

Fig. 9

Fig. 7

*Fig. 8*

Fig. 10

EP 2 821 265 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010072760 A1
- US 2010262308 A
- US 2004206561 A